# EUROPEAN PATENT APPLICATION

(11) **EP 3 970 852 A1**
(43) Date of publication of application: **23.03.2022**
(21) Application number: 20827009.0
(22) Date of filing: 18.06.2020
(51) Int. Cl.: B01J 23/44, B01D 53/94, F01N 3/10

(54) **CATALYST MATERIAL FOR METHANE REMOVAL**

(30) Priority: 20.06.2019 JP 2019114458
(71) Applicant: CATALER CORPORATION, Kakegawa-shi, Shizuoka 437-1492 (JP)
(72) Inventor: FUJITA, Naoto, Kakegawa-shi, Shizuoka 437-1492 (JP); NARITA, Keiichi, Kakegawa-shi, Shizuoka 437-1492 (JP); IMAI, Hiroto, Kakegawa-shi, Shizuoka 437-1492 (JP)
(74) Representative: Kramer Barske Schmidtchen Patentanwälte PartG mbB
(86) International application number: PCT/JP2020/023932
(87) International publication number: WO 2020/256058

(57) **Abstract**

The present invention provides a chemically stable catalyst for methane removal that exhibits excellent methane removal performance. The catalyst material for methane removal 30 of the invention includes a carrier 32 made of alumina and a catalyst 34 made of at least one of palladium and palladium oxide and carried directly on the carrier 32. With an exhaust gas purification catalyst test piece using this catalyst material for methane removal 30, a 50% methane removal temperature, which is an environmental temperature at which a methane removal rate reaches 50%, is not more than 347°C, based on the methane removal rate at 25°C. Furthermore, a specific surface area of the carrier 32 is preferably not more than 80 m²/g.

## Description

### Technical Field

The present invention relates to a catalyst material for methane removal for use in purifying exhaust gas containing methane. The priority claim for this application is based on Japanese Patent Application No. 2019-114458 filed on June 20, 2019, and the entire contents of that patent are herein incorporated by reference.

### Background Art

The exhaust gas emitted by internal combustion engines of vehicles and the like contains harmful gas components such as hydrocarbons (HC), carbon monoxide (CO) and nitrogen oxides (NOₓ) as well as particulate matter (PM) containing primarily carbon. Emissions regulations that regulate emissions of such harmful gasses and PM are being strengthened year by year. Ongoing research in the field of internal combustion engines and technologies associated therewith is therefore aimed at reducing the amounts of harmful gas and PM emissions from vehicles and the like.

In recent years, attention has focused on vehicles having natural gas internal combustion engines that use natural gas as a fuel (such as CNG (compressed natural gas) vehicles) because these emit less CO₂ per unit distance. While the HC emitted by gasoline internal combustion engines that use gasoline as a fuel are components such as aromatic hydrocarbons, olefin and paraffin that combust easily at relatively low temperatures, most of the HC emitted by natural gas internal combustion engines contain chemically stable methane (CH₄), which is hard to decompose at low temperatures. Consequently, there is demand for an exhaust gas purification catalyst capable of suitably removing harmful gas components produced by internal combustion engines, particularly methane. Examples of prior art relating to catalysts for removing methane contained in exhaust gas from natural gas internal combustion engines include Patent Literature 1 to 5, for example.

### Citation List

### Patent Literature

Patent Literature 1: Japanese Patent Application Publication No. 2002-336655
Patent Literature 2: Japanese Patent Application Publication No. 2002-263491
Patent Literature 3: Japanese Patent Application Publication No. 2001-190931
Patent Literature 4: Japanese Patent Application Publication No. 2008-246473
Patent Literature 5: Japanese Patent Application Publication No. 2014-091119

### Summary of Invention

In fact, an exhaust gas purification catalyst functions only after being heated to the temperature at which the catalyst is activated. This makes it difficult to remove methane contained in exhaust gas emitted during cold start of the internal combustion engine, and there is a concern that large quantities of unremoved methane will be discharged into the atmosphere. This is a serious problem because although natural gas internal combustion engines using natural gas as a fuel discharge little CO₂ per unit distance, methane has a global warming coefficient about 25 times that of CO₂.

In light of these circumstances, it is an object of the present invention to provide a chemically stable catalyst material for methane removal exhibiting excellent methane removal performance.

The present invention provides a catalyst material for methane removal for use in removing methane. This catalyst material for methane removal includes a carrier made of alumina and a catalyst made of at least one of palladium and palladium oxide and carried directly on the carrier. With an exhaust gas purification catalyst test piece using this catalyst material for methane removal, a 50% methane removal temperature is not more than 347°C, the 50% methane removal temperature being an environmental temperature at which a methane removal rate reaches 50%, based on the methane removal rate at 25°C. With this configuration, the 50% methane removal temperature of the catalyst material for methane removal disclosed here is reduced to an unprecedentedly low level, and high methane removal performance can be achieved at lower temperatures than previously.

In a preferred embodiment of the catalyst material for methane removal provided by this technology, specific surface area of the carrier is not more than 80 m²/g. Such a configuration is desirable because a catalyst material for methane removal that achieves the above 50% methane removal temperature can be favorably obtained by depositing a catalyst appropriately on such a carrier.

In a preferred embodiment of the catalyst material for methane removal provided by this technology, ratio of the crystal planes of the catalyst that Pd (100) and PdO (101) occupy at a joining surface between the catalyst and the carrier is at least 35 number%. Such a configuration is desirable for favorably obtaining a catalyst material for methane removal that achieves the above 50% methane removal temperature.

In a preferred embodiment of the catalyst material for methane removal provided by this technology, an average particle diameter of the catalyst is not more than 20 nm. This average particle diameter is more preferably not more than 10 nm. Such a configuration is desirable for favorably obtaining a catalyst material for methane removal that achieves the above 50% removal temperature.

In a preferred embodiment of the catalyst material for methane removal provided by this technology, a catalyst carrying rate is not more than 10 mass% of a total of the carrier and the catalyst. The catalyst material for methane removal disclosed here can provide higher methane removal performance with a smaller amount of the catalyst. Thus, a catalyst carrying rate of not more than 10 mass% is desirable because the effects can be clearly exhibited even at this carrying rate.

The catalyst material for methane removal provided by this technology can be obtained favorably by depositing palladium and/or palladium oxide on an alumina carrier in a liquid phase containing a palladium source and a polyvalent carboxylic acid. The methane removal ability of this catalyst material for methane removal is believed to depend greatly on the characteristic crystallinity of the palladium and/or palladium oxide used as a catalyst.

The catalyst material for methane removal provided by this technology is preferably used for purifying exhaust gas emitted by an internal combustion engine that uses natural gas as a fuel. When an internal combustion engine uses natural gas as a fuel, methane may constitute 80 mass% or more of the HC contained in the exhaust gas. Thus, the effects obtained above can be obtained more favorably when an exhaust gas purification catalyst using this technology is applied to purifying exhaust gas with such a high methane content.

### Brief Description of Drawings

[Fig. 1]

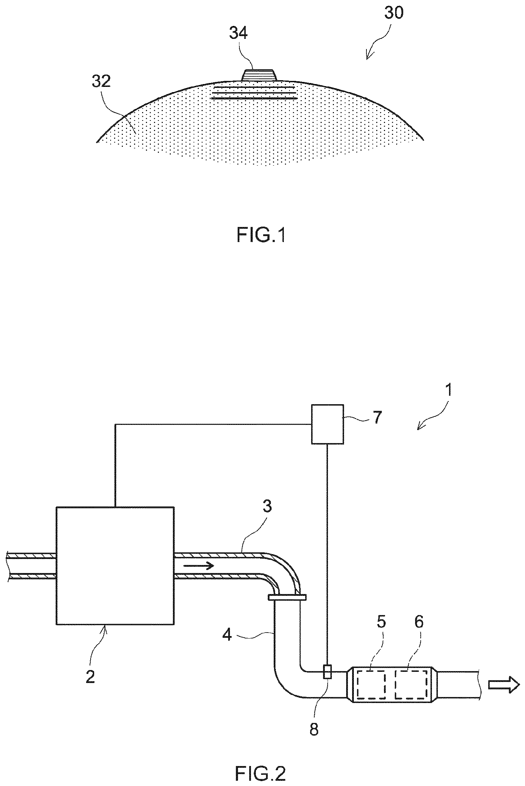

   Fig. 1 is a cross-sectional view schematically showing the configuration of a catalyst material for methane removal of one embodiment.
[Fig. 2]
   Fig. 2 is a schematic view showing the configuration of an exhaust gas purification system of one embodiment.
[Fig. 3]

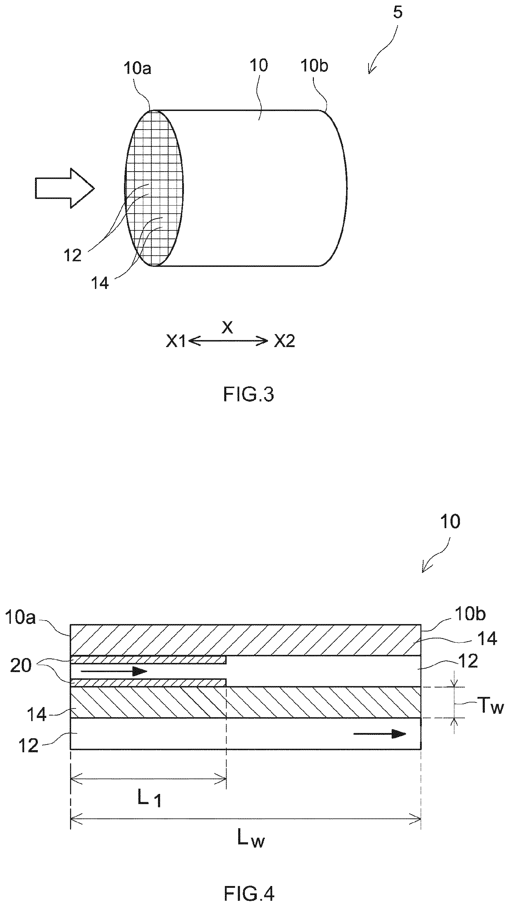

   Fig. 3 is a schematic perspective view of an exhaust gas purification catalyst of one embodiment.
[Fig. 4]
   Fig. 4 is a partial cross-sectional view schematically showing the catalyst layer in an exhaust gas purification catalyst of one embodiment.
[Fig. 5]

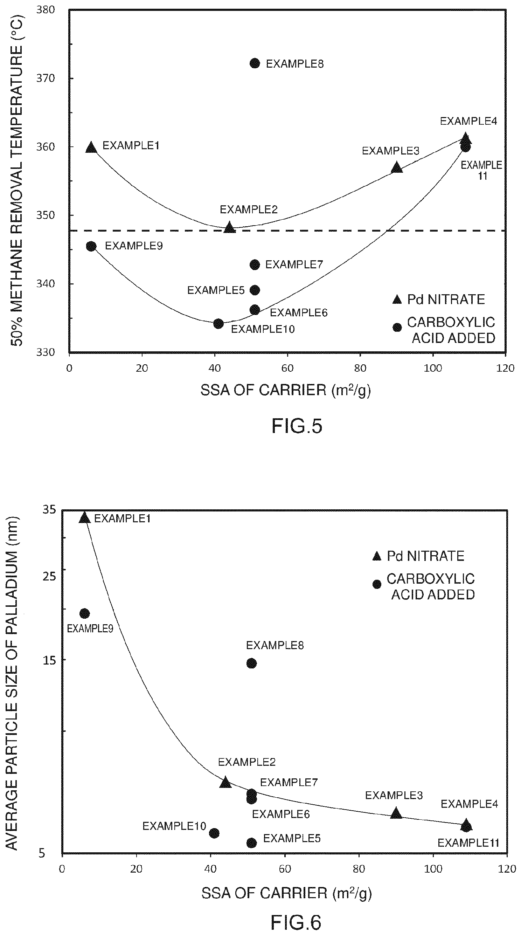

   Fig. 5 is a graph showing the relationship between the specific surface area of the carrier and the 50% methane removal temperature for the catalyst materials for methane removal of each example.
[Fig. 6]
   Fig. 6 is a graph showing the relationship between the specific surface area of the carrier and the average particle size of the catalyst for the catalyst materials for methane removal of each example.
[Fig. 7]

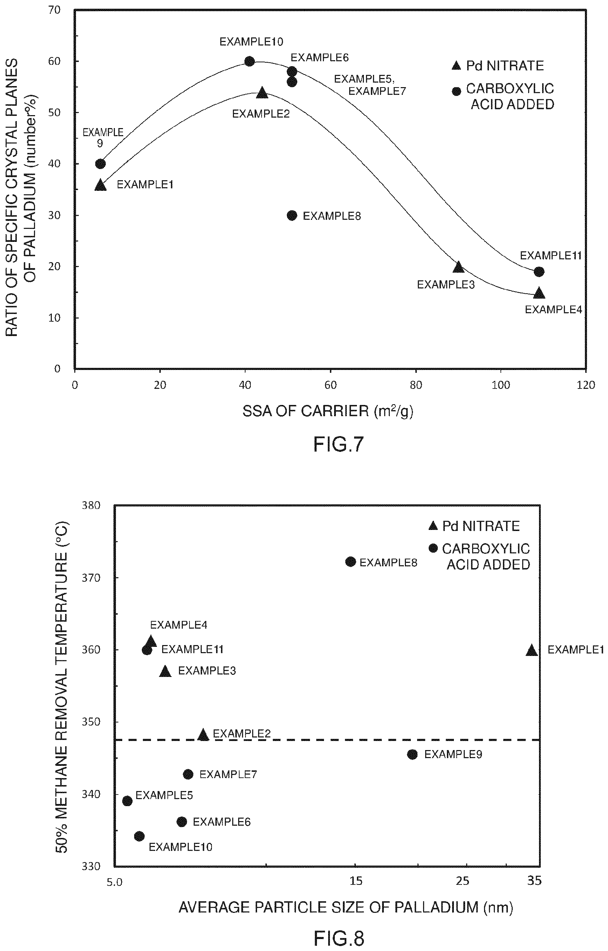

   Fig. 7 is a graph showing the relationship between the specific surface area of the carrier and the ratio of specific crystal planes at the catalyst deposit interface for the catalyst materials for methane removal of each example.
[Fig. 8]
   Fig. 8 is a graph showing the relationship between the average particle size of the catalyst and the 50% methane removal temperature for the catalyst materials for methane removal of each example.
[Fig. 9]

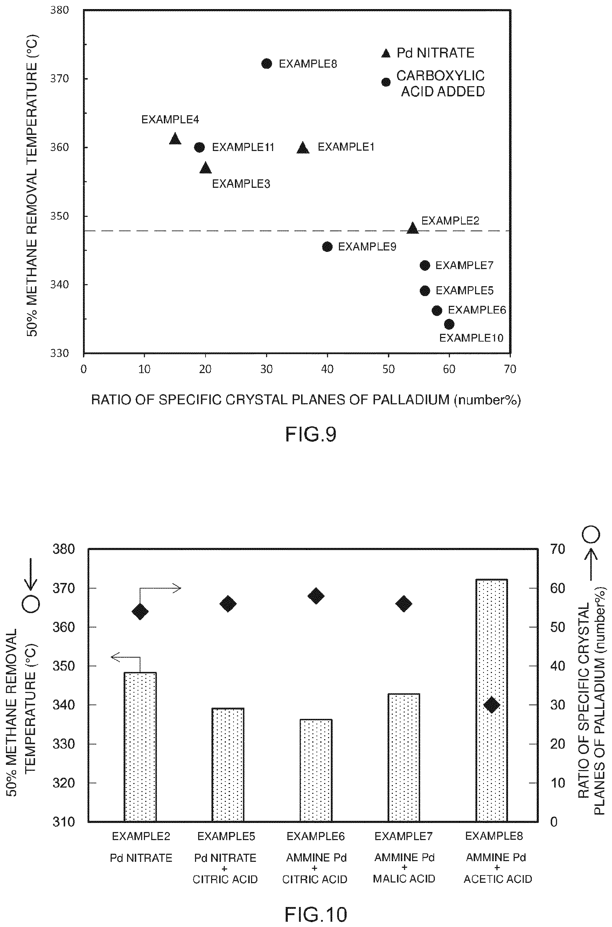

   Fig. 9 is a graph showing the relationship between the ratio of specific crystal planes at the catalyst deposit interface and the 50% methane removal temperature for the catalyst materials for methane removal of each example.
[Fig. 10]
   Fig. 10 is a graph showing the relationship between the ratio of specific crystal planes at the catalyst deposit interface and the 50% methane removal temperature for the catalyst materials for methane removal of Examples 2 and 5 to 8.

### Description of Embodiments

Preferred embodiments of the present invention are explained below with reference to the drawings. Matters not specifically mentioned in the Description that are necessary for implementing the present invention can be understood as design matters by a person skilled in the art based on prior art in the field. The present invention can be implemented based on the contents disclosed in this Description and on technical common knowledge in the field. In the drawings below, the same symbols are assigned to members and parts that perform the same action, and redundant explanations are omitted or abbreviated. The dimensional relationships (length, width, thickness, etc.) in the drawings do not necessary reflect actional dimensional relationships. Descriptions of "A to B" indicating numerical ranges in the Description mean "at least A but not more than B".

Fig. 1 is a cross-sectional schematic view of the configuration of a catalyst material for methane removal 30 of one embodiment. The catalyst material for methane removal 30 disclosed here is a catalyst material for methane removal for use in removing methane. The catalyst material for methane removal 30 comprises a carrier 32 and a catalyst 34 supported directly on the catalyst 32. Although only one catalyst 34 is shown in Fig. 1, the number of catalysts 34 is not particularly limited, and may be one or any number larger than one. The constituent elements of the catalyst material for methane removal 30 are explained below.

In the catalyst material for methane removal 30 disclosed here, the carrier 32 supporting the catalyst 34 is made of alumina. The crystal structure of the alumina is not particularly limited. Various forms of alumina such as γ-alumina, δ-alumina, θ-alumina, and α-alumina are known, and the crystal structure of the alumina used in the carrier 32 may include any one or two or more of these forms. Alumina other than high-temperature stable phase α-alumina is called transition alumina (also called intermediate alumina), and commonly consists of ultrafine primary particles with a large specific surface area. Intermediate alumina and particularly γ-alumina, which has an especially large specific surface area, is widely used as an alumina carrier in conventional automotive catalysts. By contrast, the inventors' studies have shown that it is desirable for the alumina of the carrier 32 to have relatively small specific surface area of not more than 90 m²/g (such as from 0.5 m²/g to 90 m²/g).

It is thought that if the specific surface area of the alumina is excessively large the crystallinity of the alumina constituting the carrier surface is likely to be disturbed, which can also affect the crystallinity of the catalyst supported on the carrier. Consequently, the specific surface area of the alumina is preferably not more than 80 m²/g, or more preferably not more than 70 m²/g, or not more than 65 m²/g, or not more than 60 m²/g, or not more than 55 m²/g, or not more than 50 m²/g or the like. However, if the specific surface area is too small it may be more difficult to deposit a catalyst with excellent catalytic performance. Consequently, the specific surface area of the catalyst may be, but is not limited to, at least 1 m²/g, or at least 5 m²/g, or at least 10 m²/g, or at least 20 m²/g, or at least 30 m²/g.

Although there is no unique relationship between the specific surface area of a crystal and the crystal planes deposited on the surface of the crystal, there is thought to be some degree of correlation between the specific surface area of alumina and the crystal planes appearing on the surface of the alumina. With alumina having the specific surface area described above, special crystal planes that facilitate the growth of the catalyst 34 with a suitable outer shape are likely to be exposed at a high rate on the surface of the alumina. Such special crystal planes of alumina (also called "specific alumina planes" and the like below) are alumina θ (001), 0 (111) and α (104). Using such alumina for the carrier is desirable because it is thus possible to promote the production of a catalyst 34 having a specific crystal orientation on the surface of the carrier when manufacturing the catalyst material for methane removal 30 as described below for example.

The shape of the carrier 32 is not particularly limited as long as it has the above specific surface area. As a preferred example, the carrier 32 may be composed of powdered alumina and/or porous alumina. When the carrier 32 is composed of powdered alumina, the average particle diameter thereof is not more than 20 µm for example, or typically not more than 10 µm, or not more than 7 µm, or preferably not more than 5 µm for example. To increase the heat resistance of the catalyst material for methane removal 30, the average particle diameter of the carrier 32 is typically at least 0.1 µm, or for example at least 0.5 µm, or at least 1 µm, or at least 3 µm.

In this Description, the average particle diameter of a material with a powder shape used as the catalyst material for methane removal 30 or the carrier 32 or the like is the cumulative 50% particle diameter (D₅₀) in the volume-based particle size distribution as measured by the laser diffraction/scattering method.

Furthermore, the specific surface area of the carrier 32 is a value calculated by a BET method (such as the BET single-point method) based on the amount of gas adsorption as measured by a gas adsorption method (constant capacity adsorption method). The adsorbed gas used in the gas adsorption method is not particularly limited and may favorably be nitrogen (N₂) gas for example.

In the catalyst material for methane removal 30 disclosed here, the catalyst 34 is at least one of palladium and palladium oxide. The catalyst 34 is supported directly and integrally on the alumina surface of the carrier 32. In other words, the catalyst 34 is joined to the surface of the carrier 32 without an intervening binder or the like. Specifically, for example the catalyst 34 is supported on the surface of the alumina carrier by direct crystal growth. In this case, the catalyst 34 grows as crystals on the surface of the alumina, and when the crystal planes of the alumina carrier 32 are the specific planes described above, the crystal growth of the catalyst 34 is likely to be induced with a specific crystal orientation relative to the specific planes of the alumina. Pd (100) and PdO (101) (sometimes called the "specific palladium planes" or "specific palladium crystal planes" below) are planes of palladium and palladium oxide that are easily induced to grow on the specific alumina planes described above. In other words, palladium (Pd) is easily grown with a (100) orientation on the specific planes of the alumina carrier 32. Similarly, palladium oxide (PdO) is easily grown with a (101) orientation. With regard to Pd and PdO, Pd is easily oxidized into PdO and PdO is easily reduced into Pd by reversible changes in the electronic state of Pd due to atmospheric fluctuations in the environment. In this oxidation-reduction reaction of Pd and PdO, Pd (100) and PdO (101) are equivalent planes, and palladium (Pd) and palladium oxide (PdO) can be treated as equivalents in the catalyst 34 described here (when palladium and palladium oxide do not need to be distinguished below, "palladium and palladium oxide" may simply be called "palladium"). Thus, either all or part of the catalyst 34 may consist of palladium or all or part may consist of palladium oxide. Furthermore, all or part of an individual catalyst particle may consist of palladium, or all or part may consist of palladium oxide. In the catalyst 34 disclosed here, the valence of the Pd in the palladium oxide may also be a value other than +2 (such as a value from about +1 to +3).

Thus, palladium (Pd) and palladium oxide (such as PdO) can be easily grown epitaxially as the catalyst 34 on the above specific alumina planes of the carrier 32. Thus, the catalyst material for methane removal disclosed here has a high ratio of planar orientation between the carrier 32 and the catalyst 34 as shown in Fig. 1. For example, the ratio of the crystal planes of the catalyst 34 at the joining surface between the catalyst 34 and the carrier 32 that are occupied by the specific palladium planes described above is a high value of 35 number% or more. The inventors' research has confirmed that if the ratio occupied by the specific planes of palladium is this high, the catalyst material for methane removal 30 can achieve methane removal performance beginning at a low temperature. The details are unclear, but it is thought that oriented growth of the Pd and PdO of the catalyst 34 causes specific crystal planes, growth steps and the like to form in the outer crystal shapes, and these provide activation points for the methane removal reaction in low-temperature environments.

The greater the ratio occupied by the specific planes of the palladium at the catalyst/carrier interface of the catalyst material for methane removal 30, the greater the improvement in methane removal performance, such as lowering the 50% methane removal temperature for example. The ratio of the specific planes of palladium is preferably at least 35 number%, or more preferably at least 40 number%, or for example at least 45 number%, or at least 50 number%, or at least 55 number%, or at least 60 number% or the like. The maximum ratio occupied by the specific planes of palladium at the catalyst/carrier interface is not particularly limited but may effectively be not more than 100 number% (such as 100 number%), or not more than 95 number%, or not more than 90 number%, or not more than 85 number%, or not more than 80 number%, or not more than 75 number% for example.

As discussed above, growth of the specific planes of palladium at the catalyst/carrier interface may be induced by the specific planes of alumina. From this perspective, it can be said that the ratio occupied by the specific planes of alumina out of the crystal planes of the alumina constituting the catalyst/carrier interface should be as great as possible. Consequently, the ratio of the specific planes of alumina at the interface is preferably at least 30 number%, or more preferably at least 32 number%, and may be at least 35 number% for example. The maximum ratio occupied by the specific planes of palladium at the catalyst/carrier interface is not particularly limited, and may be not more than 100 number%, (such as 100 number%), or effectively not more than 50 number%, or not more than 45 number%, such as not more than about 40 number% for example.

In the technology disclosed here, the crystal planes constituting the interface between the catalyst 34 and the carrier 32 can be specified by a known method using transmission electro microscope (TEM). In one example, crystal structure images or crystal photon images are taken at the interface between the catalyst 34 and the carrier 32, and the crystal planes constituting the interface can then be identified for both the catalyst 34 and carrier 32. The crystal planes can be identified based on known crystal plane spacing (lattice spacing), or by using the TEM electron diffraction observation mode. In this Description, the crystal planes are identified based on crystal plane spacing as described in the test examples below.

The size of the palladium and palladium oxide used for the catalyst 34 is not strictly limited. To limit costs and the like, the catalyst 34 may be a particulate catalyst (hereunder called catalyst particles or the like) with a somewhat large specific surface area, but for example preferably at least 90 number% of the catalyst particles have particle diameters of not more than about 30 nm. The catalyst particles may also suitably have particle diameters of not more than about 20 nm for example, or preferably not more than 15 nm, or more preferably not more than 10 nm, or typically not more than 8 nm, or not more than 7 nm, or not more than 6 nm or the like. Since the catalyst 34 disclosed here is itself formed in a form having excellent catalytic performance, the minimum average particle diameter of the catalyst particles does not necessarily have to be small. Consequently, the minimum average particle diameter of the catalyst particles is not particularly limited, and is normally at least about 0.1 nm, or for example at least 1 nm, or for example at least 2 nm, or at least 4 nm, or at least 5 nm or the like.

The average particle diameter of the catalyst particles is a value (volume equivalent diameter) calculated by the pulse adsorption method using carbon monoxide (CO) as the adsorbed gas. The average particle diameter by the pulse adsorption method can be measured in accordance with the "Metal surface area measurements by CO pulse method" set forth by the Reference Catalyst Subcommittee of the Catalyst Society of Japan.

In the catalyst material for methane removal 30 disclosed here, the carried amount of the carried catalyst 34 is not particularly limited, but if the carried amount of the catalyst 34 is too small this is not desirable because the catalytic activity obtained from the catalyst 34 will be inadequate. As on example, the carried amount of a catalyst 34 suitable as a catalyst for exhaust gas purification expressed as the ratio of the (carried amount) of the catalyst 34 relative to the total mass of the catalyst material for methane removal 30 may be at least 0.001 mass%, or preferably at least 0.01 mass%, such as at least 0.1 mass%. On the other hand, an excessive carried amount of the catalyst 34 is undesirable from a cost standpoint, and because particle growth of the catalyst 34 is more likely. Consequently, the ratio of the catalyst 34 as a percentage of the total mass of the catalyst material for methane removal 30 may be for example not more than 10 mass%, or preferably not more than 8 mass%, or typically not more than 5 mass%.

Such a catalyst material for methane removal 30 can be obtained by forming and carrying palladium or palladium oxide integrally on the surface of the aluminum carrier 32 in such a way that the ratio of the Pd (100) or PdO (101) on the joining surface (crystal interface) is high. For example, it can be obtained by depositing, as the catalyst 34, palladium or palladium oxide in a liquid phase on the surface of the carrier 32 in a form that enhances the methane removal performance. As a suitable example of a method for manufacturing such a catalyst material for methane removal 30, the material may be prepared by impregnating the carrier 32 with a liquid phase containing a catalyst source and a polyvalent carboxylic acid, but the method is not limited to this. In this case, using alumina with the above specific surface area as the carrier 32 is desirable for easily obtaining a catalyst material for methane removal 30 in which the ratio of specific palladium planes at the deposit interface is high.

Water or an aqueous solvent may preferably be used as the liquid medium constituting the liquid phase. The liquid medium may be 100% water, or a mixed solvent of water with a lower alcohol or the like. The water may be deionized water, pure water, distilled water, or the like. A C₁₋₄ lower alcohol may preferably be used as the lower alcohol. Specific examples include methanol, ethanol, 1-propanol, 2-propanol, 1-butanol, 2-methyl-1-propanol, 2-butanol, and 2-methyl-2-propanol.

Various compounds that allow the palladium component to exist in ion form in the liquid medium can be used as the catalyst source. For example, a salt or complex containing a palladium component may be selected and used appropriately. Examples of palladium salts include halides such as chlorides, bromides and iodides, and hydroxides, sulfides, sulfate salts, nitrate salts and carboxylate salts of palladium, and other examples include composite oxides of palladium such as potassium composite oxides, ammonium composite oxides, sodium composite oxides and the like. Examples of palladium complexes include ammine complexes, cyano complexes, halogeno complexes, hydroxy complexes and the like. The concentration of the palladium in the liquid phase is not particularly limited and may be adjusted to a degree that allows the palladium to be deposited on the carrier without aggregation of the catalyst source. The palladium concentration depends on the surface shape of the carrier and the like, but may be for example about 0.01 to 1 M, or typically about 0.1 to 0.5 M.

Although the details are not entirely clear, it is thought that the polyvalent carboxylic acid binds to the palladium source and contributes to suppressing aggregation so that fine palladium crystals (or palladium oxide crystals) can be deposited the surface of the carrier with a high degree of crystallinity. Examples of the polyvalent carboxylic acid include dicarboxylic acids such as oxalic acid, malonic acid, succinic acid, glutaric acid, adipic acid, pimelic acid, suberic acid, azelaic acid, sebacic acid, fumaric acid, malic acid, maleic acid, phthalic acid, isophthalic acid and terephthalic acid; tricarboxylic acids such as citric acid, 2-methylpropane-1,2,3-tricarboxylic acid, butane-1,2,4-tricarboxylic acid, benzene-1,2,3-tricarboxylic acid (hemimellitic acid), benzene-1,2,4-tricarboxylic acid (trimellitic acid), benzene-1,3,5-tricarboxylic acid (trimesylic acid), propane-1,2,3-tricarboxylic acid (tricarbaryl acid) and 1-cis-2,3-propenetricarboxylic acid (aconitic acid); tetracarboxylic acids such as butane-1,2,3,4-tetracarboxylic acid, cyclopentanetetra-1,2,3,4-carboxylic acid and benzene-1,2,4,5-tetracarboxylic acid (pyromellitic acid); pentacarboxylic acids such as benzene pentacarboxylic acid and pentane-1,2,3,4,5-pentacarboxylic acid; and hexacarboxylic acids such as benzene hexacarboxylic acid (mellitic acid) and the like.

The amount of the polyvalent carboxylic acid added to the liquid phase is not strictly limited because even a small amount can improve the deposited state of the palladium (and palladium oxide). To adjust the crystallinity of the palladium (and palladium oxide) more favorably, however, the molar ratio of the polyvalent carboxylic acid is for example 1.5 times or more, or preferably twice or more, or more preferably 3 times or more, or for example 5 times or more than the total molar ratio of palladium in the liquid phase. The maximum ratio of the polyvalent carboxylic acid is not particularly limited but may be not more than about 10 times for example.

The liquid phase can be uniformly contacted with or impregnated in the carrier surface by immersing the carrier in a liquid medium (that is, a liquid phase) containing the above catalyst source and polyvalent carboxylic acid. The carrier immersion time depends on the shape of the carrier but may be for example from about 10 minutes to about 1 hour. One or more of drying the carrier in advance, stirring the liquid phase containing the immersed carrier, or decompressing the liquid phase containing the immersed carrier may be adopted to promote impregnation of the carrier by the liquid phase.

Drying serves to remove the liquid medium (typically water) constituting the liquid phase, and may be accomplished for example by natural drying, suction drying, heating to the volatile temperature of the liquid medium (such as about 100°C to 150°C), decompression drying, freeze drying or the like.

Although this is not essential, the dried catalyst 34 may also be baked together with the carrier 32. Baking is desirable for example as a means of converting a precursor contained in hydroxide or other form in the catalyst 34 into palladium (and palladium oxide) and increasing the crystallinity of the palladium (and palladium oxide). Baking may be performed for example by heating for about 30 minutes to a few hours (such as from 0.5 to 3 hours) at a temperature range (such as 250°C to 600°C) at which coarse particles of the palladium (and palladium oxide) do not form.

The catalyst material for methane removal 30 disclosed here can be obtained in this way. The catalyst material for methane removal 30 may be used in the form in which it is obtained (such as powder form) or may be molded into a desired form. For example, a powdered form of the carrier 32 may be used to favorably achieve liquid phase deposition of the palladium (and palladium oxide), and the catalyst material for methane removal 30 obtained after liquid phase deposition can then be molded into larger particles, pellets, or the like. A catalyst material for methane removal 30 with excellent handling properties can thus be obtained.

The above catalyst material for methane removal 30 is provided as a catalyst with excellent methane removal performance. For example, it is possible to achieve a 50% methane removal temperature of 347°C or less, which represents a relatively low-temperature methane removal catalyst activity in comparison to similar conventional catalyst materials. Consequently, this catalyst material for methane removal 30 can be used favorably for example as a purification catalyst for purifying exhaust gas from internal combustion engines using natural gas as a fuel, and particularly as a purification catalyst for purifying exhaust gas from internal combustion engines that are subjected to repeated starting and stopping. An exhaust gas purification system using this catalyst material for methane removal 30 is explained simply below.

Fig. 2 is a schematic view showing the configuration of an exhaust gas purification system 1 of one embodiment. The exhaust gas purification system 1 purifies harmful components such as HC, CO and NOₓ contained in exhaust gas emitted by the internal combustion engine 2, and also traps PM contained in the exhaust gas. This exhaust gas purification system 1 includes the internal combustion engine 2 and its exhaust path. The exhaust gas purification system 1 of this embodiment is provided with the internal combustion engine 2, the exhaust path, an engine control unit (ECU) 7, and a sensor 8. The exhaust gas purification catalyst of this technology is installed in the exhaust path of the internal combustion engine 2 as one constituent element of the exhaust gas purification system 1. The exhaust gas flows through the interior of the exhaust path. The arrow in the figure shows the direction of flow of the exhaust gas. In this Description, the side near the internal combustion engine 2 in the direction of flow of the exhaust gas is the upstream side, and the side further from the internal combustion engine 2 is the downstream side.

An air-fuel mixture containing oxygen and fuel gas is supplied to the internal combustion engine 2. The internal combustion engine 2 combusts this air-fuel mixture and converts the resulting thermal energy to kinetic energy. The ratio of oxygen and fuel gas supplied to the internal combustion engine 2 is controlled by the ECU 7. The combusted air-fuel mixture becomes exhaust gas that is discharged to the exhaust path. An internal combustion engine 2 of the configuration shown in Fig. 2 is composed primarily of an internal combustion engine that uses natural gas as fuel.

The internal combustion engine 2 is connected to the exhaust path at an exhaust port (not shown). The exhaust path of this embodiment is composed of an exhaust manifold 3 and an exhaust pipe 4. The internal combustion engine 2 is connected to the exhaust pipe 4 via the exhaust manifold 3. Typically, the exhaust path is provided with a catalyst body 5 and a filter body 6. For example, the catalyst body 5 is provided with a catalyst body of this technology. The catalyst body 5 may also be provided for example with another catalyst such as a dual catalyst, an HC selective reduction NOₓ catalyst or NOₓ storage reduction catalyst, or a urea selective reduction NOₓ catalyst or the like. The filter body 6 is not an essential component but may be provided as necessary. When a filter body 6 is provided, it may be configured conventionally, with no particular limitations. For example, the filter body 6 may be a particulate filter (PF) that reduces PM emissions by trapping fine particulate matter, or a catalytic particulate filter comprising a dual or three-part catalyst or the like supported on a particulate filter to confer a catalytic purification function. The catalyst material for methane removal 30 disclosed here may also be used as the catalyst in such a catalytic particulate filter. The catalyst body 5 and filter body 6 may be arranged at will, and either one each or a plurality of the catalyst body 5 and filter body 6 may be provided independently.

The ECU 7 is connected electrically to the internal combustion engine 2 and the sensor 8. The ECU 7 controls the drive of the internal combustion engine 2 in response to signals received from the sensor 8 (an oxygen sensor, temperature sensor or pressure sensor for example), which detects the operating state of the internal combustion engine 2. The ECU 7 may be configured as a conventional unit, without any particular limitations. The ECU 7 is a processor or integrated circuit for example. The ECU 26 receives data about the operating state of a vehicle or the like, the amount of gas emitted from the internal combustion engine 2, and temperature, pressure, and the like for example. Based on the received data, the ECU 7 also performs operating control such as controlling fuel injection to the internal combustion engine 2, adjusting the air intake and the like.

Fig. 3 is a schematic perspective view of a catalyst body 5 of one embodiment. X in the figure indicates the first direction of the catalyst body 5. The catalyst body 5 is disposed in the exhaust pipe 4 so that the first direction is aligned with the direction of flow of the exhaust gas. In terms of the flow of exhaust gas, one direction X1 of the first direction X is called the exhaust gas inflow side (upstream side), while the other direction X2 is called the exhaust gas outflow side (downstream side) for purposes of convenience. In terms of the catalyst body 5, the direction X1 may also be called the front side and the other direction X2 may be called the rear side. Fig. 4 is an enlarged schematic view showing a part of a catalyst body 5 of one embodiment in a cross-section cut along the first direction X. The catalyst body 5 disclosed here is provided for example with a base material 10 having a straight flow structure, together with a catalyst layer 20. The base material 10 and the catalyst layer 20 are explained in that order below.

Various materials and forms used in conventional applications of this kind can be used for the base material 10. The base material 10 typically has a so-called honeycomb structure. This base material 10 may preferably be made of a material with high heat resistance and high resistance to rapid temperature changes, such as stainless steel or a ceramic such as cordierite, aluminum titanate or silicon carbide (SiC). The external shape of the base material 10 is not particularly limited but may be cylindrical (in this embodiment) for example. In addition to the cylindrical shape, however, an elliptical pillar shape, polygonal prism shape, amorphous shape, pellet shape or the like may be adopted as the external shape of the base material as a whole. In this embodiment, the pillar axis direction of the cylindrical base material 10 corresponds to the first direction X. The end of the base material 10 in the direction X1 is the first end 10a, and the end in the other direction X2 is the second end 10b. In this Description, the dimension of a constituent element of the base material 10 or the like in the first direction X is called the length.

The base material 10 contains cells (cavities) 12 extending in the first direction X in the honeycomb structure. Each cell 12 is a through hole passing through the base material 10 in the first direction X and serves as a flow channel for the exhaust gas. The base material 10 contains dividers 14 separating the cells 12. There is no particular limit to the shape of the cells 12 in cross-section perpendicular to the first direction X (hereunder also called the "cross-sectional shape"), or in other words to the structure of the intervening dividers 14. Examples of the cross-sectional shape of the cells 12 include various geometric shapes such as for example a rectangular shape such as a square, parallelogram, rectangle or trapezoid, another polygonal shape (such as a hexagon or octagon), or a circular shape or the like. The shape, size and number and the like of the cells 12 can be designed appropriately considering the amount and components of the exhaust gas supplied to the catalyst body 5.

The dividers 14 face the cells 12 and separate adjacent cells 12 from each other. The specific surface area of the base material 10 can be increased by reducing the thickness Tw of the dividers 14 (here and below, the dimension perpendicular to the surface), which is also desirable from the standpoint of reducing weight and heat capacity. The thickness Tw of the dividers 14 may be for example not more than 1 mm, or not more than 0.75 mm, or not more than 0.5 mm, or not more than 0.1 mm or the like. The strength and durability of the catalyst body 5 can be increased by giving the dividers 14 an appropriate thickness. From this perspective, the thickness Tw of the dividers 14 may also be for example at least 0.01 mm, or at least 0.025 mm. The length (total length) Lw of the dividers 14 in the direction X is not particularly limited, and may generally be from 50 to 500 mm, such as from 100 to 200 mm for example. In this Description, the volume of the base material 10 means the apparent volume of the base material. Thus, the volume of the base material 10 includes the cell 12 volume as well as the actual volume of the supporting honeycomb structure (including the dividers 14).

As shown in Fig. 4, the catalyst layer 20 is disposed on the surface of the dividers 14. The catalyst layer 20 contains the catalyst material for methane removal 30 disclosed here as a palladium catalyst (precious metal catalyst). By configuring the Pd layer of the catalyst body 5 from the catalyst material for methane removal 30 of this technology, it is possible to remove methane a low temperatures and reduce methane exhaust. In other words, it is possible to provide a catalyst body 5 with excellent methane removal performance.

The catalyst layer 20 may also contain another precious metal catalyst in addition to the palladium catalyst. Alternatively, the catalyst body 5 may be provided with a catalyst layer containing another precious metal catalyst (not shown) in addition to the catalyst layer 20 (hereunder also called the palladium (Pd) layer) containing the palladium catalyst. A platinum (Pt) rhodium (Rh) layer may be considered for this other catalyst layer. Pt layers include platinum (Pt) and alloys consisting primarily of Pt as a precious metal catalyst. Rh layers include rhodium (Rh) and alloys consisting primarily of Rh as a precious metal catalyst. The catalyst layer 20 and the other catalyst layers may also contain other metal catalysts in addition to the above precious metal catalysts. Examples of such metal catalysts include platinum group catalysts such as Rh, Pd, Pt, ruthenium (Ru), osmium (Os) and iridium (Ir) and alloys of these, as well as metals and alloys of metals including metal elements such as iron (Fe), cobalt (Co), nickel (Ni), copper (Cu), silver (Ag) and gold (Au) instead of or in addition to the above platinum group catalysts. However, Pd, Pt and Rh may each constitute at least 80 mass% or preferably at least 90 mass%, or more preferably at least 95 mass%, or most preferably substantially 100 mass% of the metal catalysts contained the respective Pd, Pt and Rh layers. Of course, inadvertent inclusion of other metal catalysts is also allowable.

Of the Pd, Pt and Rh layers, the Pd and Pt layers have especially high activity as oxidation catalysts and exhibit strong oxidation effects against CO and HC in particular out of the harmful components contained in the exhaust gas in the catalyst body 5. The Rh layer has especially high activity as a reducing catalyst and exhibits strong reducing effects against NOₓ in particular out of the harmful components contained in the exhaust gas in the catalyst body 5. The catalyst body 5 can function as a three-way catalyst if it has a Pd layer, a Pt layer, and an Rh layer. The arrangement of the Pd layer, Pt layer and Rh layer is not particularly limited, but to further reduce the 50% methane removal temperature for example, the Pd layer is more preferably disposed on the relative front side (for example, facing downstream from the first end 10a on the upstream side). The Pt layer is preferably disposed on the relative rear side (for example, the region facing upstream from the second end 10b on the downstream side). To increase the Noₓ removal ability, the Rh layer is preferably disposed in a longer region extending in the first direction (for example, overlapping the Pd layer and the Pt layer).

In addition to the respective precious metal catalysts, the Pt and Rh layers may also comprising carriers for carrying these catalysts. Known carriers (typically powders) that are conventionally used for such applications may be applied appropriately to these carriers. Desirable examples of carriers include metal oxides such as alumina (Al₂O₃), rare earth metal oxides, alkali metal oxides, alkali earth metal oxides, ceria (CeO₂), zirconia (ZrO₂), silica (SiO₂), magnesia (MgO) and titania (TiO₂), and solid solutions of these, such as ceria-zirconia composite oxide (CZ composite oxide: CeO₂-ZrO₂) for example. One of these alone or a combination of two or more kinds may be used. Of these, one or both of alumina and CZ composite oxide is preferred. The carrier may be a polycrystal or a single crystal.

In addition to the precious metal catalyst and the carrier for the precious metal catalyst, the Pd, Pt and Rh layers may also contain appropriate optional components. Examples of such optional components include for example co-catalysts having no supported metal catalyst, oxygen storage capacity (OSC) materials having oxygen storage ability, Noₓ adsorbing materials having NOₓ adsorption ability, and stabilizers and the like. Examples of co-catalysts include alumina and silica. Examples of OSC materials include ceria and composite oxides containing ceria, such as CZ composite oxide.

Examples of stabilizers include rare earth elements such as lanthanum (La) and yttrium (Y), alkali earth elements such as calcium (Ca) and barium (Ba), and other transition metal elements and the like. These elements are typically contained in the catalyst layer in oxide form. Of these, rare earth elements such as lanthanum and yttrium are desirable as stabilizers because the can improve the specific surface area at high temperatures without impeding the catalytic function. These carriers may be polycrystals or single crystals. In the catalyst layer 20, a Pd layer containing an oxide catalyst preferably also contain a stabilizer such as barium element. This can suppress oxidation catalyst poisoning and improve catalytic activity. It is also possible to improve the dispersibility of the oxidation catalyst and suppress particle growth of the oxidation catalyst at an even higher level.

The coated amounts of the Pd layer, Pt layer and Rh layer are each not particularly limited. To increase the flowability of the exhaust gas on the dividers 14 and reduce pressure loss, each may be not more than about 120 g/L, or not more than 100 g/L, or preferably not more than 80 g/L, or for example not more than 70 g/L per 1 L of the volume of the base material. In certain embodiments, the coated amounts may be not more than 50 g/L for example, or typically not more than 30 g/L. To further improve the methane and other exhaust gas purification performance, on the other hand, the coated amounts may be at least about 5 g/L, or preferably at least 10 g/L, or for example at least 20 g/L per 1 L of the volume of the base material. Within this range, both pressure loss reduction and improved exhaust gas purification performance can be achieved simultaneously at a higher level. The coated amount of the catalyst layer 20 is the mass of the catalyst layer 20 contained in the base material per unit volume. However, the volume of the base material considers only the part of the base material on which the catalyst layer 20 is formed in the first direction X and does not consider the part of the base material on which no catalyst layer 20 is formed.

The thicknesses of the Pd layer, Pt layer and Rh layer are not particularly limited and may be designed appropriately according to the size of the cells 12 of the base material 10 and the like. As one example, the thicknesses of the Pd layer, Pt layer and Rh layer are each independently from about 20 µm to 500 µm, or preferably from about 50 µm to 200 µm for example.

A catalyst body 5 of the configuration described above can be manufactured by methods such as the following for example. First, slurries are prepared for forming the base material 10 and the catalyst layer 20. For the slurries, a slurry for forming the Pd layer, a slurry for forming the Pt layer and a slurry for forming the Rh layer may each be prepared separately as necessary. The slurry for forming the Pd layer can be prepared by dispersing the catalyst material for methane removal 30 in a dispersion medium. The slurries for the other catalyst layers can be prepared by dispersing the components of the metal catalysts (typically, solutions containing ions of the catalyst metals) as essential components together with other optional components such as carriers, co-catalysts, OSC materials, binders, and various additives in a dispersion medium. The average particle diameter of a powder of the catalyst material for methane removal 30 or the like in the slurry may be for example at least about 0.1 µm, or preferably at least 1 µm, such as 10 µm or less for example, or preferably about 5 µm or less. An alumina sol, silica sol or the like may be used as a binder. The properties of the slurry (such as viscosity and solids ratio) may be adjusted appropriately by adjusting the size of the base material 10, the shape of the cells 12 (dividers 14), the desired properties of the catalyst layer 20 and the like.

Next, the prepared slurries for forming the catalyst layers are made to flow into the cells 12 from the ends of the base material 10 to the desired lengths in the direction X. When forming the Pd layer, the slurry may be introduced from the first end 10a and supplied as far as length L1 in the X2 direction. When forming the Pt layer, the slurry may be introduced from the second end 10b and supplied to the desired length in the X1 direction. When forming the Rh layer, the slurry may be introduced from either the first end 10a or the second end 10b and supplied to the desired length. Excess slurry may be removed by suction from the opposite end during this process. Excess slurry may also be expelled from the cells 12 by air blowing from the opposite end. The suction speed and/or air blowing speed in this case depends on the viscosity of the slurry, but may be about 10 to 100 m/s, or preferably 10 to 80 m/s, or for example not more than 50 m/s. After each slurry has been supplied, the base material 10 to which the slurry has been supplied is dried and baked at a predetermined temperature for a predetermined time. This serves to sinter the particulate raw materials and form a porous catalyst layer 20. The drying and baking methods may be similar to those used in forming conventional catalyst layers. A catalyst layer 20 can be formed on the surface of the dividers 14 of the base material 10 in this way.

With a catalyst body 5 of such a configuration, the exhaust gas emitted from the internal combustion engine 2 flows into the cells 12 from the first end 10a of the base material 10. The exhaust gas entering the cells 12 passes through the catalyst layer 20 formed on the surface of the dividers 14 and is discharged from the second end 10b. In this case, the Pd layer for example is disposed on the upstream side of the catalyst layer 20. The catalyst material for methane removal 30 disclosed here is contained in the Pd layer. This catalyst material for methane removal 30 can have a 50% methane removal temperature lower than 360°C for example and excellent low-temperature removal performance. Thus, even if the exhaust gas contains methane as a HC and the exhaust gas temperature tends to decrease due to F/C control or the like, the catalyst body 5 can still remove more methane at a lower temperature than previously. Furthermore, the exhaust gas is warmed to a higher temperature because the catalytic reaction occurs upstream. In addition, the exhaust gas passing through a Pd layer on which a Rh layer is laminated also passes through a Pt layer on which the Rh layer is laminated. Because the exhaust gas reaching this Pt layer and Rh layer has been warmed to a higher temperature, harmful components including methane in the exhaust gas are removed at a high removal rate as the gas passes through the Pt layer on which the Rh layer is laminated. The NOₓ component in the exhaust gas is also purified due to the presence of the Rh layer. Once the harmful components have been removed from the exhaust gas in this way, it is discharged outside the catalyst body 5 from the end 10b on the exhaust gas outlet side.

Test examples of the present invention are explained below, but not with the intent of limiting the present invention to what is shown in the test examples.

### [Test Example 1]

### (Example 1)

9.8 g of alumina powder with a specific surface area of 6 m²/g was prepared as a carrier and dispersed in an aqueous palladium nitrate solution with the concentration adjusted so as to obtain a Pd carried amount of 0.2 g, and this was stirred for 30 minutes and then dried by heating for 12 hours at 120°C. The resulting dried powder was heat treated for 1 hour at 500°C to obtain a catalyst material of Example 1 in powder form. This catalyst material was then pressed at 300 kN of pressure with a pressing apparatus, and the resulting molded body was sifted to adjust the particle size to 0.5 to 1.0 mm and obtain a catalyst test piece in pellet form in Example 1.

### (Example 2)

A catalyst material of Example 2 and a catalyst test piece were obtained as in Example 1 with all conditions the same except that the carrier in Example 1 was replaced with an alumina powder with a specific surface area of 44 m²/g.

### (Example 3)

A catalyst material of Example 3 and a catalyst test piece were obtained as in Example 1 with all conditions the same except that the carrier in Example 1 was replaced with an alumina powder with a specific surface area of 90 m²/g.

### (Example 4)

A catalyst material of Example 4 and a catalyst test piece were obtained as in Example 1 with all conditions the same except that the carrier in Example 1 was replaced with an alumina powder with a specific surface area of 109 m²/g.

### (Example 5)

1.8 g of citric acid was added to the aqueous palladium nitrate solution of Example 1. An alumina powder with a specific surface area of 51 m²/g was used as the carrier. A catalyst material of Example 5 and a catalyst test piece were then obtained as in Example 1 with all other conditions the same.

### (Example 6)

An aqueous solution of ammine palladium (carried amount of Pd adjusted to 0.2 g) was used instead of the aqueous palladium nitrate solution in Example 5, and 1.8 g of citric acid was added. A catalyst material of Example 6 and a catalyst test piece were then obtained as in Example 1 with all other conditions the same.

### (Example 7)

1.3 g of malic acid was added to the aqueous Pd solution instead of the 1.8 g of citric acid used in Example 6, and a catalyst material of Example 7 and a catalyst test piece were then obtained as in Example 6 with all other conditions the same.

### (Example 8)

0.6 g of acetic acid were added to the aqueous Pd solution instead of the 1.8 g of citric acid used in Example 6, and a catalyst material of Example 8 and a catalyst test piece were then obtained as in Example 6 with all other conditions the same.

### (Example 9)

A catalyst material of Example 9 and a catalyst test piece were obtained as in Example 6 except that an alumina powder with a specific surface area of 6 m²/g was substituted for the carrier of Example 6.

### (Example 10)

A catalyst material of Example 10 and a catalyst test piece were obtained as in Example 6 except that an alumina powder with a specific surface area of 41 m²/g was substituted for the carrier of Example 6.

### (Example 11)

A catalyst material of Example 11 and a catalyst test piece were obtained as in Example 6 except that an alumina powder with a specific surface area of 109 m²/g was substituted for the carrier of Example 6.

### [TEM Observation of Catalyst Materials for Methane Removal]

When the catalyst materials for methane removal of Examples 1 to 11 above were subjected to X-ray diffraction analysis, palladium (Pd) and palladium oxide (PdO) were detected in addition to the alumina of the carrier. When the catalyst materials for methane removal of each example were observed by TEM, it was confirmed that a material with darker contrast was supported in the form of nanoparticles on the surface of the powdered alumina. This shows that the catalyst materials for methane removal of each example comprised Pd and/or PdO deposited on the surface of an alumina carrier. With regard to Pd and PdO, it is known that Pd is easily oxidized into PdO and PdO is easily reduced into Pd by reversible changes in the electron state of Pd due to atmospheric fluctuations in the exhaust gas composition and the like for example. The Pd and/or PdO deposited on the surface of the alumina carrier are sometimes simply called "palladium particles" below for purposes of convenience.

### (Ratio of Specific Crystal Planes at Interface)

Next, atomic structure images were taken of the catalyst materials for methane removal of Examples 1 to 11, and the crystal structures at the interface between the alumina carrier and the palladium particles were analyzed. Specifically, electron structure images of the crystal interface between the alumina carrier and the palladium particles were taken at 11 or more points (N = at least 11) in the catalyst material for methane removal of each example. The electron structure images can be obtained for example by adjusting the tilt of the TEM observation sample so that incident direction of the electron beam is aligned with the crystal zone axes of the alumina carrier and the palladium particle. The crystal interface between the alumina carrier and the palladium particle was observed with respect to different palladium particles carried on multiple alumina particles.

The crystal planes of the palladium at the interface between the alumina and the palladium were investigated from the resulting electron structure images of the interface. In this test example, the crystal planes at the palladium deposit interface were investigated by measuring the interplanar spacing of the planes parallel to the interface in the palladium and identifying the interplanar spacing of each crystal plane of the palladium. Based on the results, the ratio of the specific crystal planes out of the total number of identified crystal planes at the palladium interface (N = at least 11) was calculated from the formula: ratio of specific crystal planes (number%) = (number of samples in which crystal planes at interface are specific crystal planes) ÷ (number of samples in which crystal planes are identified at interface) × 100. The specific crystal planes of palladium were two planes, Pd (100) and PdO (101). The results are shown in Table 1 below.

### [Particle Size of Palladium Particles]

The particle size of the palladium particles deposited on the surface of the alumina carrier was measured. A value calculated from the amount of palladium and the metal surface area obtained with a chemisorption analyzer using the CO pulse method was adopted as the particle diameter of the palladium particles (volume equivalent diameter). The results are shown in Table 1 below.

### [Evaluating Methane Removal Performance]

The methane removal performance of the catalyst test pieces of Examples 1 to 7 with respect to model exhaust gas of a natural gas (CNG) vehicle was investigated using a catalyst evaluation device. The catalyst evaluation device is equipped with a mass flow controller, a heating furnace, and an engine exhaust gas analyzer, and produces gas of a specific composition and supplies it to a catalyst sample while also analyzing the components of the inflow gas to the catalyst sample and the outflow gas from the catalyst sample. Specifically, 1.0 g of the catalyst test piece of each example was set in the catalyst evaluation device, and CNG vehicle model exhaust gas was supplied as the temperature of the part where the catalyst test piece was set was raised from room temperature (25°C) to 500°C at a rate of 20°C/min. The methane removal rate was measured continuously based on the ratio of the measured methane (CH₄) concentrations in the inflow gas to the catalyst test piece and the outflow gas from the catalyst test piece, and the temperature of the catalyst test piece when the methane removal rate reached 50% (50% methane removal temperature: T_{50%}) was investigated. The results are shown in Table 1 below.

Gas of the following composition was used as the CNG vehicle model gas.

| | |
|---|---|
| CH₄: | 4,000 ppm |
| O₂: | 10 mass% |
| H₂O; | 10 mass% |
| CO: | 500 ppm |
| NO: | 500 ppm |
| N₂: | Remainder |

### [Table 1]

**Table 1**

| Example | Alumina | | Palladium source | | | Methane removal catalyst | | |
|---|---|---|---|---|---|---|---|---|
| | Specific surface area (m²/g) | Added amount (g) | Compound | Added amount (g) | Number of carboxyl groups | Palladium average particle size (nm) | Ratio of specific palladium planes (number%) | 50% methane removal temp. (°C) |
| 1 | 6 | 9.8 | Pd nitrate | 0.2 | 0 | 33.7 | 36 | 360.0 |
| 2 | 44 | 9.8 | Pd nitrate | 0.2 | 0 | 7.5 | 54 | 348.3 |
| 3 | 90 | 9.8 | Pd nitrate | 0.2 | 0 | 6.3 | 20 | 357.1 |
| 4 | 109 | 9.8 | Pd nitrate | 0.2 | 0 | 5.9 | 15 | 361.3 |
| 5 | 51 | 9.8 | Pd nitrate + citric acid | 0.2 | 3 | 5.3 | 56 | 339.1 |
| 6 | 51 | 9.8 | Ammine Pd + citric acid | 0.2 | 3 | 6.8 | 58 | 336.2 |
| 7 | 51 | 9.8 | Ammine Pd + malic acid | 0.2 | 2 | 7.0 | 56 | 342.8 |
| 8 | 51 | 9.8 | Ammine Pd + acetic acid | 0.2 | 1 | 14.7 | 30 | 372.2 |
| 9 | 6 | 9.8 | Ammine Pd + citric acid | 0.2 | 3 | 19.5 | 40 | 345.5 |
| 10 | 41 | 9.8 | Ammine Pd + citric acid | 0.2 | 3 | 5.6 | 60 | 334.2 |
| 11 | 109 | 9.8 | Ammine Pd + citric acid | 0.2 | 3 | 5.8 | 19 | 360.0 |

### [Evaluation]

### (Palladium Specific Crystal Planes and 50% Methane Removal Temperature)

For the catalyst materials for methane removal of Examples 1 to 11, the relationship between the specific surface area of the carrier and the 50% methane removal temperature is shown in Fig. 5, the relationship between the specific surface area of the carrier and the average particle size of the palladium particles is shown in Fig. 6, and the relationship between the specific surface area of the carrier and the ratio of specific crystal planes in the palladium particles at the interface between the carrier and the palladium particles is shown in Fig. 7. Furthermore, the relationship between the average particle size of the palladium particles and the 50% methane removal temperature is shown in Fig. 8, and the relationship between the ratio of specific crystal planes and the 50% methane removal temperature is shown in Fig. 9. A lower 50% methane removal temperature means that high methane removal performance is obtained at a lower temperature.

With the catalyst materials for methane removal of Examples 1 to 4 using palladium nitrate as the palladium raw material, as shown in Fig. 5, the 50% methane removal temperature differed considerably depending on the specific surface area of the carrier even though the carried amount of the palladium catalyst was the same. In these examples, the 50% methane removal temperature was lowest in Example 2, in which the specific surface area of the carrier was about 40 m²/g. It is known that in general crystals are deposited with smaller particle diameters the larger the specific surface area of the carrier on which the crystals are deposited, and as shown in Fig. 6, a similar tendency can be confirmed in Examples 1 to 4 using a palladium nitrate aqueous solution as the palladium raw material. Furthermore, catalytic activity is generally higher the finer the catalyst. However, it was found that with the catalyst materials for methane removal of Examples 3 and 4 the 50% methane removal temperature is high even though the average particle size of the palladium particles is small. This is thought to be because in the catalyst materials for methane removal of Examples 3 and 4, as shown in Fig. 7, the ratio of the specific crystal planes (that is, Pd (100) and PdO (101)) at the deposit interface of the deposited palladium particles on the carrier is extremely small. In other words, as shown in Figs. 8 and 9, it is thought that if the specific surface area of the carrier is large and the palladium particles are excessively small, the crystallinity of the carrier surface and the palladium deposited thereon declines, detracting from the catalytic performance of the palladium and thereby increasing the 50% methane removal temperature.

By contrast, somewhat different characteristics from the catalyst materials for methane removal of Examples 1 to 4 were observed with the catalyst materials for methane removal of Examples 5 to 11, in which the palladium source and palladium deposit environment were changed. That is, as shown in Fig. 5, even using a carrier with the same small specific surface area of 6 m²/g as in Example 1, the 50% methane removal temperature was dramatically lower with the catalyst material for methane removal of Example 9, which was prepared using an aqueous solution of citric acid and ammine Pd as the palladium source. The 50% methane removal temperature of the catalyst material for methane removal of Example 9 was not more than 348°C (specifically about 345°C), confirming that it was possible to achieve a low 50% methane removal temperature that could not be obtained using palladium nitrate as the palladium raw material. In the catalyst material for methane removal of Example 9, the average particle size of the palladium is smaller than in Example 1 (see Fig. 6), but still relatively large at 19.5 nm. However, as shown in Fig. 7, the palladium particles of Example 9 have a greater ratio of the specific crystal planes at the interface with the carrier, and it is thought that catalytic activity begins at a lower temperature due to the presence of these specific crystal planes, so that a high methane removal rate is achieved even at low temperatures. This shows that palladium particles with superior methane removal performance can be deposited by using an aqueous solution of ammine Pd and citric acid rather than an aqueous palladium nitrate solution as the palladium source.

As shown in Fig. 7, the ratio of specific crystal planes of palladium in a catalyst material for methane removal can be increased by using an aqueous solution of citric acid and ammine palladium Pb as the palladium source and by changing the environment in which the palladium is deposited as shown by a comparison of Examples 1 to 4 with Examples 5 and 9 to 11, in which the specific surface area of the carrier was changed. It was also found that the 50% methane removal temperatures of the catalyst materials for methane removal of Examples 5 and 9 to 11 were reduced as a result as shown in Fig. 5. However, it also appeared that the amount of reduction in the 50% methane removal temperature declined as the specific surface area of the carrier increased, and in Examples 4 and 11 in which the specific surface area was 109 m²/g there was no great difference in the 50% methane removal temperature depending on the palladium source. This is thought to be because a good carrier surface for palladium deposition cannot be provided if the specific surface area of the carrier is too large, and palladium fine crystals with good crystallinity cannot be formed as discussed below. From this perspective, it is felt that at minimum the specific surface area of the carrier should be not too large, such as not more than 100 m²/g, or preferably not more than 90 m²/g, such as not more than about 60 m²/g for example.

In Examples 5 to 8, the palladium source and deposition environment are changed while keeping the specific surface area of the carrier at a constant 51 m²/g, and. For example, as shown in Fig. 5, although the 50% methane removal temperature is reduced with the catalyst materials for methane removal of Examples 5 to 7 in comparison with the examples using an aqueous Pd nitrate solution as the palladium source, the 50% methane removal temperature is much higher with the catalyst material for methane removal of Example 8. Figs. 6 and 7 show that even though the specific surface area of the carrier is the same, the average particle size of the palladium is small and the ratio of the specific crystal planes is larger with the catalyst materials for methane removal of Examples 5 to 7, while in Example 8 the average particle size of the palladium particles is large, and the ratio of the specific crystal planes is small. This shows that the crystallinity of the palladium can be changed to favor methane removal by changing the palladium deposit environment.

As shown in Fig. 10, even though the specific surface areas of the carriers are somewhat different, it appears from a comparison of the Example 2 using only an aqueous Pd nitrate solution as the Pd source and the Example 5 using citric acid as well as an aqueous Pd nitrate solution that the 50% methane removal temperature is greatly reduced by adding citric acid. Furthermore, the combination of Example 6 (ammine Pd + citric acid) is shown to improve methane removal performance more than the combination of Example 5 (Pd nitrate + citric acid) as the palladium source. The same effects were also obtained in Example 7 by adding malic acid rather than citric acid as in Example 6, but the effects of increasing the ratio of specific crystal planes and reducing the 50% methane removal temperature were not obtained by adding acetic acid in Example 8. It is thought that this is because the average particle size of the deposited palladium particles can be decreased and the ratio of the specific crystal planes at the interface can be increased by including a polyvalent carboxylic acid when depositing the palladium particles. Conversely, including a monocarboxylic acid causes the average particle size of the palladium particles to increase and the ratio of the specific crystal planes to decrease.

Thus, it was found that methane removal performance is increased by having palladium particles with Pd (100) or equivalent PdO (101) crystal growth planes and carrying these particles so that these planes are parallel to the planes of the carrier. In other words, the greater the ratio of palladium particles grown with a Pd [100] orientation or its equivalent PdO [101] orientation relative to the carrier, the greater the methane removal performance. It can also be said that removal performance is increased if the palladium particles are not too large (such as not more than about 30 nm, or preferably not more than about 20 nm). In this test example, it seems to be desirable to prepare the catalyst material for methane removal by depositing palladium on a carrier with a specific surface area of not more than 100 m²/g in a liquid phase containing a polyvalent carboxylic acid.

It also appears that if the average particle diameter of the palladium is not more than 20 nm and the ratio of specific crystal planes at the interface is more than 30 number%, such as at least about 40 number% in a catalyst material for methane removal, the 50% methane removal temperature is less than 348°C, which is desirable for increasing methane removal performance.

Specific examples of the present invention were explained in detail above, but these are only examples and do not limit the scope of the claims. The technology described in the claims encompasses various changes and modifications to the specific examples given above.

For example, although a catalyst material for methane removal using only palladium as the methane removal catalyst is used in the above embodiments, the mode of the catalyst material for methane removal is not limited to this. In addition to catalysts containing only palladium, it is also possible to use a catalyst material for methane removal containing rhodium, a catalyst material for methane removal containing platinum, or a catalyst material for methane removal containing rhodium and platinum. Alternatively, a catalyst material for methane removal containing only palladium may be used in combination with a catalyst material for methane removal containing a catalyst other than palladium.

Also, although the internal combustion engine in the above embodiments is a CNG engine, the internal combustion engine installed in combination with the catalyst may also be a gasoline engine, diesel engine or the like as long as the catalyst is used for methane removal. These internal combustion engines may also be installed in hybrid vehicles provided with vehicle drive power supplies.

## Claims

1. A catalyst material for methane removal for use in removing methane, the material comprising:
a carrier made of alumina; and
a catalyst made of at least one of palladium and palladium oxide and carried directly on the carrier, wherein
with an exhaust gas purification catalyst test piece using this catalyst material for methane removal, a 50% methane removal temperature, which is an environmental temperature at which the methane removal rate reaches 50%, is not more than 347°C, based on the methane removal rate at 25°C.

2. The catalyst material for methane removal according to Claim 1, wherein a specific surface area of the carrier is not more than 80 m²/g.

3. The catalyst material for methane removal according to Claim 1 or 2, wherein a ratio of the crystal planes of the catalyst that Pd (100) and PdO (101) occupy at a joining surface between the catalyst and the carrier is at least 35 number%.

4. The catalyst material for methane removal according to any one of Claims 1 to 3, wherein an average particle diameter of the catalyst is not more than 20 nm.

5. The catalyst material for methane removal according to any one of Claims 1 to 4, wherein a carried ratio of the catalyst relative to a total amount of the carrier and the catalyst is not more than 10 mass%.
